# EUROPÄISCHE PATENTSCHRIFT

(11) **EP 1 338 376 B1**
(45) Veröffentlichungstag und Bekanntmachung des Hinweises auf die Patenterteilung: **27.04.2005**
(21) Anmeldenummer: 03002163.8
(22) Anmeldetag: 03.02.2003
(51) Int. Cl.: B23Q 1/48, B23B 3/06

(54) **Fräsmaschine zur Fräs- und Drehbearbeitung von Stangenmaterial**
Milling machine for milling and turning rod shaped material
Fraiseuse pour fraisage et tournage de pièces en forme de barre

(30) Priorität: 25.02.2002 DE 10207970
(43) Veröffentlichungstag der Anmeldung: 27.08.2003
(73) Patentinhaber: DECKEL MAHO Pfronten GmbH, 87459 Pfronten (DE)
(72) Erfinder: Geissler, Alfred, 87459 Pfronten (DE); Lechleiter, Karl, 87466 Oy-Mittelberg (DE); Seitz, Reinhold, 87659 Hopferau (DE)
(74) Vertreter: Beetz & Partner Patentanwälte

(56) Entgegenhaltungen:
- US-A- 5 025 539
- US-A- 6 131 259

## Beschreibung

Die Erfindung betrifft eine Fräsmaschine zur Fräs- und Drehbearbeitung von Stangenmaterial zu einzelnen Werkstücken, bestehend aus einem an einem Ständer in einer ersten Koordinatenachse motorisch verfahrbaren vertikalen Spindelkopf, dessen Arbeitsspindel zur wahlweisen Aufnahme von Fräswerkzeugen und von Drehwerkzeugen ausgebildet ist, einer Trennvorrichtung zum Querteilen des Stangenmaterials und einer seitlich neben dem Arbeitsbereich angeordneten Spannvorrichtung, die einen Werkstückspanner mit in einer horizontalen Koordinatenachse verlaufenden Spannachse sowie einen Drehantrieb für den Werkzeugspanner aufweist.

In neuerer Zeit sind eine Reihe von Werkzeugmaschinen zur spanenden Werkstückbearbeitung bekannt geworden, mit denen Fräs- und auch Dreharbeiten an einem Werkstück ausgeführt werden können. Der grundsätzliche Vorteil derartiger Maschinen besteht darin, daß die Werkstücke für die unterschiedlichen Dreh- und Fräsarbeiten in einer Aufspannung auf dem gleichen Werkstücktisch verbleiben können, was die Bearbeitungsgenauigkeit erhöht und den gesamten Bearbeitungsablauf durch Einsparung von Spannvorgängen vereinfacht.

Ein erster Typ derartiger Werkzeugmaschinen ist von seinem Grundkonzept her den Drehmaschinen zuzuordnen und für Werkstücke geeignet, die zum überwiegenden Teil durch Drehvorgänge bearbeitet werden. Für die vereinzelte Durchführung von speziellen Fräsbearbeitungen können bei diesen Drehmaschinen auch Spindelköpfe als Zusatzaggregate an geeigneten Stellen des Ständers angebaut werden.

Ein zweiter Typ von Werkzeugmaschinen zur Fräs- und Drehbearbeitung von Werkstücken basiert auf dem technischen Konzept der Fräsmaschinen, das sich ja von dem der Drehmaschinen durch eine größere Anzahl an Fahrachsen unterscheidet. Diese Maschinen enthalten den bei Fräsmaschinen üblichen Spindelkopf mit integrierter Werkzeugspindel, der in einer oder auch in mehreren Koordinatenachsen motorisch verfahrbar an einem Ständer angeordnet ist. Auf einem Werkstücktisch befindet sich eine Spannvorrichtung mit einem Werkstückspanner zum drehfesten Einspannen von meist stangenförmigen Werkstücken der verschiedensten Abmessungen, die aus einem nebengeordneten Stangenmagazin in den Werkstückspanner eingeschoben werden. Auf Werkzeugmaschinen dieses Typs überwiegt die Fräsbearbeitung gegenüber den an gleichen Werkstücken vorzunehmenden Dreharbeiten.

Aus der WO 98/08648 ist eine gattungsgemäße Fräsmaschine für die Fräs- und Drehbearbeitung von Stangenmaterial zu Einzelwerkstücken bekannt, die ein Maschinenbett und einen darauf in den zwei horizontalen X- und Y-Koordinatenachsen verfahrbaren Fahrständer aufweist. An der vertikalen Vorderseite des Fahrständers ist ein Vertikalschlitten in der vertikalen Z-Koordinatenachse motorisch verfahrbar geführt, der einen Spindelkopf mit vertikaler Arbeitsspindel trägt. Auf dem Maschinenbett ist seitlich neben dem Arbeitsraum der Werkzeugspindel auf einem ortsfesten Tisch ein Werkstückträger vorgesehen, der eine Spannvorrichtung in Form einer Spannpatrone oder eines Mehrbackenfutters sowie einen damit gekoppelten Drehantrieb aufweist. Diese Spannvorrichtung definiert eine Spannachse, in welcher die stangenförmigen Werkstücke absatzweise vorgeschoben werden. Diese Spannvorrichtung ist ferner in zwei auf dem Maschinenbett bzw. am Tisch befestigten Lagerbökken um eine zur Spannachse quer verlaufende Achse verschwenkbar, wobei der Tisch als Drehtisch ausgebildet ist. Der numerisch gesteuerte Drehantrieb kann den Werkstückspanner mit für Dreharbeiten geeigneten Drehzahlen von z.B. 4000 bis 6000 U/min antreiben. Auf dieser Werkzeugmaschine können die aus dem Werkstückspanner in den Arbeitsraum ragenden Werkstückenden in herkömmlicher Weise mit Hilfe eines in die Arbeitsspindel eingespannten Werkzeuges drehbearbeitet werden. Um in gleicher Aufspannung auch Fräsarbeiten insbesondere in den Endbereichen des Werkstückes durchführen zu können, kann durch eine Schwenkbewegung des Werkstückspanners das darin fixierte zuvor vom Stangenmaterial abgetrennte Werkstück schräg gestellt werden, so daß mit dem vertikalen Fräswerkzeug auch die Werkstückenden bearbeitet, beispielsweise abgerundet, werden können.

Aus der EP 0 368 996 B1 ist eine ähnliche Fräsmaschine zur Fräs- und Drehbearbeitung eines Werkstückes bekannt, bei der ein vertikaler Spindelkopf mit seiner Frässpindel in der vertikalen Z-Koordinatenachse verfahrbar an einem Fahrständer angeordnet ist. Eine Greif- und Schwenkeinheit befindet sich auf einem horizontal in Längsrichtung des Maschinenständers unabhängig verfahrbaren Schlitten und dient der Halterung eines Stangenabschnitts, dessen vorderes Ende bereits bearbeitet worden ist. Durch eine Schwenkbewegung dieser Greif- und Schwenkeinheit um eine horizontale Achse kann die Rückseite des Werkstücks von dem vertikalen Fräswerkzeug in wechselnden Richtungen bearbeitet werden.

Zur Bearbeitung von Werkstücken aus Holz, Kunststoff und Metall ist aus der DE 197 39 512 A1 eine Dreh- und Fräsmaschine bekannt, die einen in der vertikalen Z-Achse an der Stirnseite eines ortsfesten Maschinenständers verfahrbaren Vertikalschlitten mit daran angebautem vertikalen Spindelkopf aufweist. Vor der Stirnseite des Ständers und seitlich neben dem Arbeitsbereich der vertikalen Arbeitsspindel ist eine motorisch drehbare Spannvorrichtung vorgesehen, in welcher das zu Einzelwerkstücken zu bearbeitende Stangenmaterial eingespannt wird. Die Spannachse dieser Spannvorrichtung verläuft in der horizontalen X-Koordinatenachse. Eine allseitige Fräsbearbeitung der aus der Spannvorrichtung vorstehenden Stangenenden ist mit dieser Maschine nicht möglich.

Aus der DE 196 33 899 A1 ist eine weitere Werkzeugmaschine zur spanenden Bearbeitung von stangenförmigen Werkstücken bekannt, die einen in mehreren Koordinatenachsen verstellbaren Bearbeitungskopf zur Bearbeitung eines freien Endbereiches des Werkstükkes sowie eine Spannvorrichtung mit einer darin integrierten Spannzange für die Werkstückstangen aufweist. Die Werkstückenden können von fünf Seiten her durch seitliches Abkippen des das jeweilige Werkstück haltende Spannteil bearbeitet werden. Der die horizontal ausgerichtete Werkzeugspindel enthaltende Bearbeitungskopf kann auf einem drehbaren Rundtisch in drei Achsen verstellbar sein.

Schließlich ist aus der DE 199 18 082 A1 eine Universal-Werkzeugmaschine zur Fräs- und Drehbearbeitung von Werkstücken größerer Abmessungen bekannt, die auf einem quer zur Frontseite des Fahrständers nach vorn verlaufenden Bett einen in Bettlängsrichtung verfahrbaren Schlitten trägt, auf welchem ein drehangetriebener Rundtisch von relativ großen Abmessungen angeordnet ist. An der Vorderseite des Fahrständers befindet sich eine vertikal verfahrbare Konsole mit einer schräg nach unten um 45° geneigten Endfläche, an welcher ein Schwenkkopf mit daran befestigter Arbeitsspindel angeordnet ist. Durch eine Drehbewegung des Schwenkkopfes um die zu seiner Auflageebene senkrechte Achse kann die Arbeitsspindel aus einer vertikalen in eine horizontale Arbeitsstellung - und umgekehrt - gebracht werden.

Aufgabe der Erfindung ist es, eine gattungsgemäße Fräsmaschine zur spanenden Bearbeitung von Stangenmaterial zu einzelnen Werkstücken zu schaffen, die bei gegenüber bekannten Maschinen vereinfachtem Aufbau eine universelle allseitige Fräs- und auch Drehbearbeitung der vorstehenden Stangenenden zu einzelnen Werkstücken ermöglicht.

Diese Aufgabe wird erfindungsgemäß durch die Merkmale des Anspruchs 1 gelöst.

Durch die Schwenkbarkeit des Spindelkopfes um seine Längsachse kann der Spindelkopf in vorgewählten Schrägstellungen fest eingestellt werden, damit ein in der Werkzeugspindel eingespanntes drehangetriebenes Fräswerkzeug an dem vorkragenden Werkstückende beispielsweise Schrägnuten oder auch Schrägbohrungen ausarbeiten kann. Es besteht jedoch auch die Möglichkeit, daß der Spindelkopf während eines Bearbeitungsvorganges eine vorgegebene Schwenkbewegung ausführt, wodurch beispielsweise mit dem entsprechend ausgewählten Fräswerkzeug runde oder ballige Flächen am Werkstückende ausgebildet werden können. In gleicher Weise eröffnen die möglichen Schräglagen des Spindelkopfes und damit auch der Arbeitsspindel bestimmte Dreharbeiten, beispielsweise die Herstellung von Hinterschneidungen, wenn in die Spindel ein Drehwerkzeug eingespannt ist und das in der Spannvorrichtung befindliche Werkstück von deren Drehantrieb mit der für diese Bearbeitungsart notwendigen Drehzahl angetrieben wird. Die Anordnung des Spindelkopfes an einem auf dem ortsfesten Ständer verfahrbaren Horizontalschlitten ergibt ausreichende Fahrwege in der zur Werkstückachse parallelen Koordinatenachse, so daß die Werkstükke im gesamten Arbeitsbereich mit schräg gestelltem Werkzeug bearbeitet werden können und daneben auch Werkzeugwechsel der Fräs- und Drehwerkzeuge aus mindestens einem Magazin auf einfache Weise in kurzen Zeitspannen nach dem Pick-up-Prinzip durchgeführt werden können. Mit der Möglichkeit der Schrägstellung des Werkzeuges funktionell verbunden ist das Vorsehen einer vertikal an Ständerführungen verfahrbaren Schrägkonsole, auf deren seitlich gegenüber den Vertikalführungen versetzter Oberseite die Spannvorrichtung angeordnet ist. Hierdurch wird erreicht, daß sich der Werkstückspanner unmittelbar neben dem Arbeitsbereich befindet, so daß die vorstehenden Werkstückenden sicher fixiert sind, und zum anderen, daß das Einführende der Spannvorrichtung seitlich über den Maschinenständer vorsteht, so daß das Stangenmaterial z.B. aus einem Stangenmagazin auf einfache Weise in die Spannvorrichtung eingeschoben werden kann.

Zweckmäßige Ausgestaltungen und Weiterbildungen der Erfindung sind in den Unteransprüchen angegeben. So kann vorteilhaft an der der Spannvorrichtung gegenüberliegenden Seite des Arbeitsraums ein Werkzeugmagazin angeordnet und am Ständer montiert sein, wobei die vorgegebene Werkzeugwechselposition direkt durch eine Fahrbewegung des Spindelkopfes auf dem Ständer angefahren werden kann. Der für die Anordnung des Werkzeugmagazins benötigte Freiraum ergibt sich durch die Tatsache, daß die Schrägkonsole nur vertikal verfährt. Insgesamt wird auf diese Weise eine Werkzeugmaschine mit universellen Einsatzmöglichkeiten bei geringen Abmessungen erhalten.

Die universelle Einsatzmöglichkeit der erfindungsgemäßen Werkzeugmaschine wird wesentlich gesteigert durch eine spezielle Tischkonstruktion, die frontal vor der Ständerstirnseite unter dem Arbeitsraum angeordnet ist und zumindest eine Spannplatte aufweist, auf der ein Zusatzaggregat, z.B. ein Reitstock, eine Werkstück-Wendevorrichtung, ein Meßgerät od. dgl., eingespannt werden kann. Diese Tischkonstruktion ist mit ihrem Unterbau zweckmäßig mit der die Spannvorrichtung tragenden Schrägkonsole als ein durchgehendes hochsteifes Bauteil ausgeführt und in den Vertikalführungen des Maschinenständers verfahrbar. In vorteilhafter Weiterbildung weist diese Tischkonstruktion eine vordere vertikale Spannplatte sowie eine horizontale Spannplatte jeweils mit Spann-Nuten auf, an denen wahlweise verschiedenartige Zusatzgeräte festgespannt werden können.

Die erfindungsgemäße Werkzeugmaschine vereinigt die bekannten Vorteile einer Universal-Fräsmaschine mit denen eines Drehautomaten. Die jeweils benötigten Dreh- oder Fräswerkzeuge können in die mehrachsig positionierbare Arbeitsspindel automatisch innerhalb weniger Sekunden eingewechselt werden. Besonders geeignet ist die erfindungsgemäße Werkzeugmaschine zur Herstellung von kürzeren komplexen Werkstücken aus Stangenmaterial von relativ großem Durchmesser mit schrägen oder auch balligen Flächen, Nuten, Bohrungen od. dgl., wobei der Anteil an Fräsarbeiten überwiegen sollte.

Im folgenden werden Ausführungsbeispiele der erfindungsgemäßen Werkzeugmaschine anhand der Zeichnungen im einzelnen beschrieben. Es zeigen:
- Fig. 1: eine auch zur Durchführung von Dreharbeiten konzipierte Fräs- und Bohrmaschine in schematischer perspektivischer Darstellung;
- Fig. 2: die Werkzeugmaschine nach Fig. 1 mit schräger Arbeitsspindel in perspektivischer Frontansicht; und
- Fig. 3, 4: eine andere Ausführung der Werkzeugmaschine mit einer Tischkonstruktion, die eine vertikale und horizontale Spannfläche aufweist, jeweils in perspektivischer Darstellung.

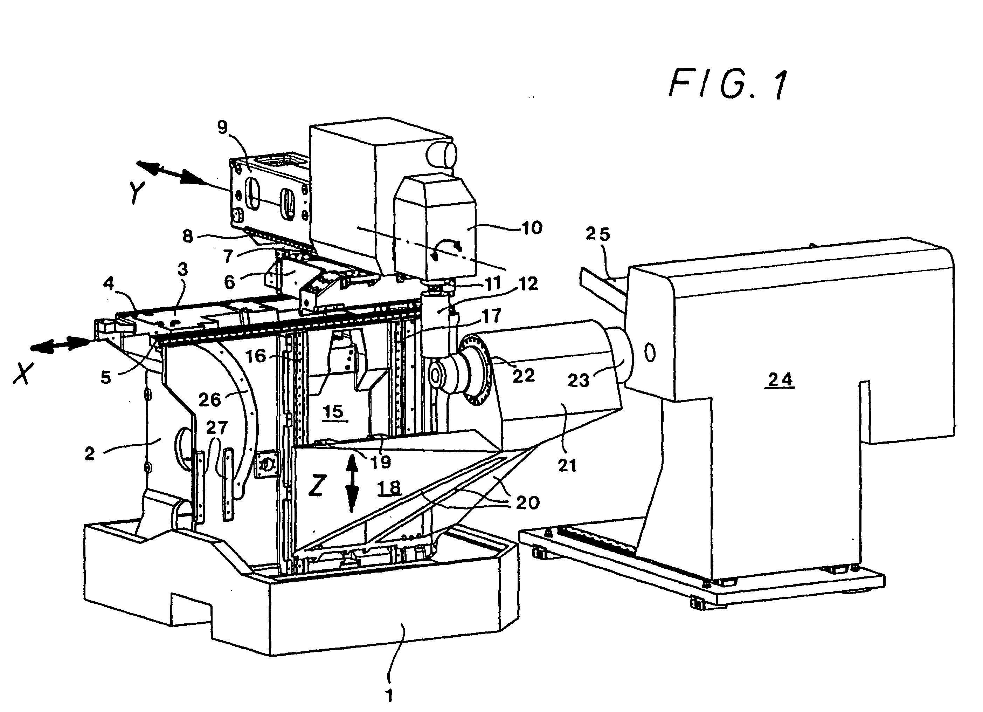

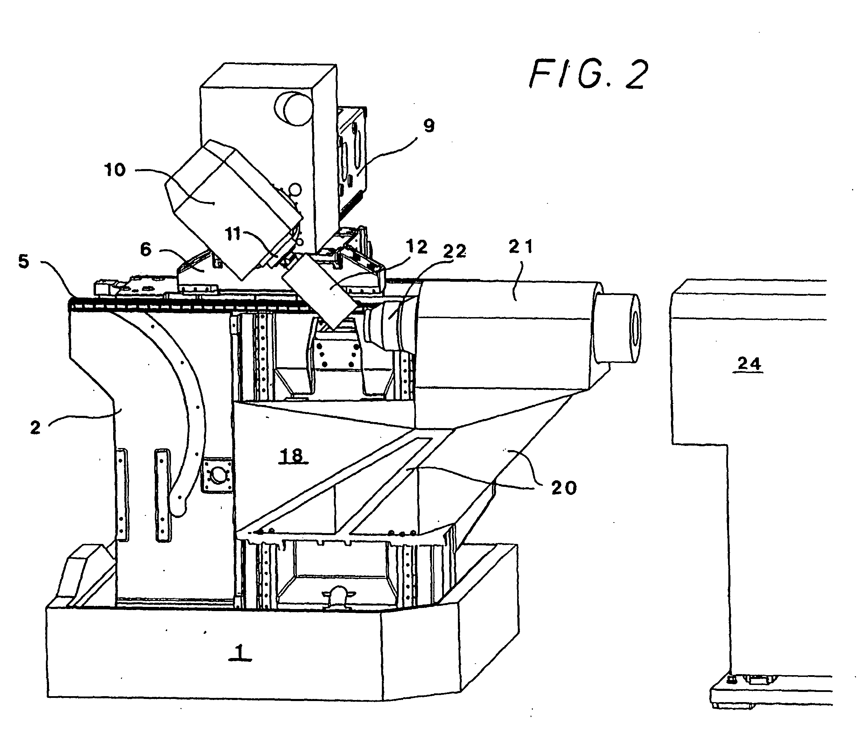

Die in den Fig. 1 und 2 dargestellte Fräs- und Bohrmaschine enthält eine als stabile Wanne ausgeführte Basis 1, auf deren rückwärtigem Teil ein formsteifer Maschinenständer 2 mit etwa rechteckigen Außenmaßen starr befestigt ist. Auf der im wesentlichen ebenen Oberseite 3 des Ständers 2 verlaufen zwei randseitige Führungsschienen 4, 5 in der X-Koordinatenachse. Auf diesen beiden Führungsschienen 4, 5 ist ein Schlitten 6 verfahrbar geführt, der oberseitige Führungsschuhe 7 trägt. In diesen Führungsschuhen 7 laufen an der Unterseite eines Spindelstocks 8 befestigte Führungsschienen 9, so daß der Spindelstock 8 in der Y-Koordinatenachse motorisch verfahren kann. An der Stirnseite des Spindelstocks 8 befindet sich ein Spindelkopf 10, in dessen Arbeitsspindel 11 wahlweise ein Fräs- bzw. Bohrwerkzeug 12 oder ein Drehwerkzeug, z.B. ein Drehmeißel, eingespannt werden kann. Zur Durchführung von Fräsarbeiten ist im Spindelkopf 10 ein herkömmlicher Drehantrieb vorgesehen, wobei die Arbeitsspindel auch als sog. Hochgeschwindigkeits-Spindel (Drehzahlbereich mehrere 10.000 Upm) ausgebildet sein kann. Daneben sind zur Durchführung von Dreharbeiten im Spindelkopf 10 Fixiermittel integriert, die ein Verdrehen eines eingespannten Drehwerkzeuges um seine Längsachse sicher verhindern. Bei der dargestellten Ausführung ist ein Fräswerkzeug 12 in die Arbeitsspindel 10 eingespannt.

Wie aus Fig. 2 ersichtlich, ist der Spindelkopf 10 um eine Y-Koordinatenachse verschwenkbar, so daß das jeweils eingespannte Werkzeug 12 beliebige zur Durchführung von bestimmten Arbeitsvorgängen zweckmäßige Schräglagen einnehmen kann und neben z.B. Schrägbohrungen bei fester Werkzeugstellung auch z.B. ballige Flächen durch eine kontinuierliche Schwenkbewegung erzeugt werden können. Auch eine horizontale Werkzeugstellung ist möglich.

Der als formsteife Rahmenkonstruktion ausgeführte Ständer 2 weist in seinem mittleren Bereich eine Ausnehmung 15 auf. An den vorderen Eckbereichen der diesen Durchbruch 15 begrenzenden Ständerteile sind vertikale Führungsschienen 16, 17 befestigt, an denen eine Schrägkonsole 18 mit ihrer formsteifen Rückwand über entsprechende - nicht dargestellte - Führungsschuhe vertikal verfahrbar geführt ist. Diese Schrägkonsole 18 greift mit rückwärtigen Ansätzen 19 in den Durchbruch 15 ein und enthält nach vorn seitlich oben gerichtete steife Streben 20, die seitlich über die Rückwand auskragen und eine hochsteife Tragkonstruktion für eine Spannvorrichtung 21 bilden. In diese Spannvorrichtung 21 sind Werkzeugspanner, z.B. in Form von Spannzangen oder Spannfuttern 22, eingebaut, welche ein stangenförmiges Werkstück in seiner Arbeitsposition mit vorstehendem Endteil fixieren, das durch das äußere Ende 23 der Spannvorrichtung 21 in deren durchgehenden Hohlraum bis in den Werkstückspanner 22 eingeschoben wird. In der Spannvorrichtung 21 ist ferner ein Drehantrieb eingebaut, der über die Programmsteuerung der Werkzeugmaschine den Werkstückspanner 22 zusammen mit dem darin fixierten Werkstück in die für die Dreharbeiten erforderliche Rotation versetzt. Dieser Drehantrieb kann wegen der hochsteifen Halterung und Fixierung der Spannvorrichtung 21 auf der Schrägkonsole 18 größer als bisher möglich dimensioniert sein, so daß auch gröbere Dreharbeiten ausgeführt werden können. Im Fräsbetrieb kann der Drehantrieb den Werkzeugspanner 22 und damit das eingespannte Werkstück langsam verdrehen oder aber durch Teildrehungen in vorgegebenen Winkelbereichen verstellen und fixieren.

Bei der dargestellten Werkzeugmaschine ist ein Stangenmagazin 24 mit Stangeneinlauf 25 zugeordnet, das eine zügige automatisierbare Werkstückbeschickung der Spannvorrichtung 21 ermöglicht.

An der in den Fig. 1 und 2 linken Vorderseite des Ständers 2 sind Halterungen 26 für eine in Form eines Rundbleches ausgebildete Schutzabdeckung eines Werkzeugmagazins vorgesehen. Dieses Werkzeugmagazin kann entweder in die Basis 1 eingebaut oder aber an Halterungen 27 des Ständers 2 befestigt sein.

Die Arbeitsweise und Besonderheiten der erfindungsgemäßen Fräsmaschine ergeben sich ohne weiteres durch Betrachtung der dargestellten Ausführungen. In der in Fig. 1 gezeigten vertikalen Ausrichtung des Werkzeugs 12 können Fräsarbeiten an einem aus dem Werkstückspanner 22 vorstehenden Ende des stangenförmigen Werkstücks durchgeführt werden.

Mit dem in Fig. 2 gezeigten schräggestellten Werkzeug 12 lassen sich spezielle Fräsbearbeitungen an den Endflächen des - hier nicht dargestellten - Werkstückes, z.B. schräge Ringflächen oder - nach Einwechseln eines neuen Werkzeugs - Schrägbohrungen, ausführen. In entsprechender Weise kann ein zuvor in die Arbeitsspindel eingespanntes Drehwerkzeug spezifische Bearbeitungen, z.B. Auskehlungen mit Schrägflächen, ringförmige Hinterschneidungen od. dgl., ausführen.

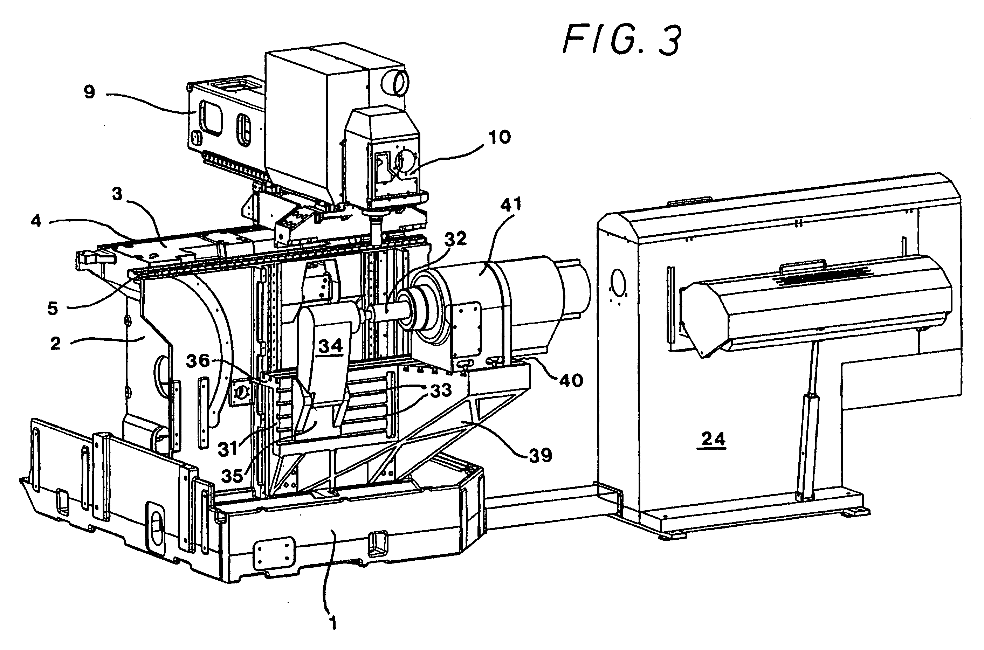

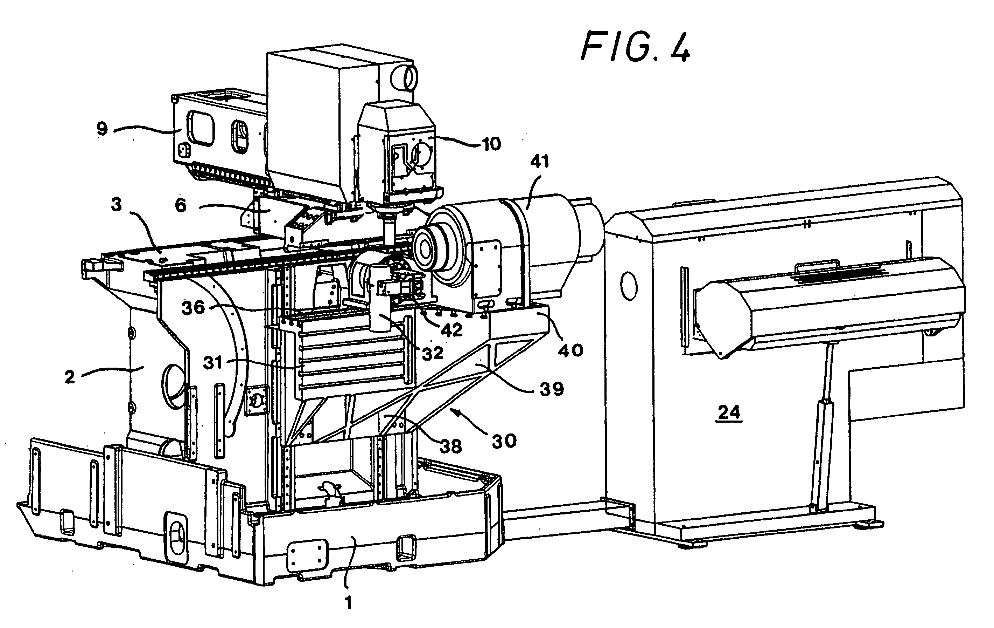

Die in den Fig. 3, 4 dargestellte Werkzeugmaschine entspricht in ihrem Aufbau weitgehend der vorstehend beschriebenen Ausführung, was durch Kennzeichnung entsprechender Bauteile durch gleiche Bezugszeichen zum Ausdruck kommt. Unterschiede bestehen in der Ausbildung der Schrägkonsole, die hier Teil einer mittels der vertikalen Führungsschienen 16, 17 am Ständer 2 verfahrbaren Tischkonstruktion 30 ist. Diese Tischkonstruktion 30 hat eine frontseitige vertikale Spannplatte 31 mit horizontal und parallel zur Längsachse des zu bearbeitenden Stangenmaterials 32 verlaufenden Spann-Nuten 33. An dieser vertikalen Spannplatte 31 kann ein geeignetes Zusatzgerät, beispielsweise ein in Fig. 3 dargestellter schwenkbarer Reitstock 34 mit seinem Unterteil 35, in stufenlos wählbarem Abstand zum Werkstück 32 angeordnet und lösbar fixiert werden. Die Tischkonstruktion 30 hat ferner eine an die vertikale Spannplatte 31 anschließende obere horizontale Spannplatte 36, deren Spann-Nuten 37 parallel zu den Spann-Nuten der vertikalen Spannplatte 31 verlaufen. Auf dieser horizontalen Spannplatte 36 kann ein in Fig. 4 gezeigtes Zusatzgerät 42, z.B. eine Werkstück-Wendevorrichtung, aufgespannt werden. Die beiden Spannplatten 31 und 36 können als einteilige Winkelplatte oder auch als zwei Einzelplatten ausgeführt sein. Beide Spannplatten 31, 36 sind auf einem frontseitigen Konsolenteil 38 montiert, an das seitlich die Schrägkonsole 39 einteilig anschließt. Diese Schrägkonsole 39 hat eine obere Spannplatte 40 mit achsparallelen Spann-Nuten, die hier im gleichen Niveau wie die Spann-Nuten 37 der horizontalen Spannplatte 36 verlaufen. Die Spannplatte 36 kann einteilig oder auch gesondert zur horizontalen Spannplatte 36 ausgeführt sein und trägt eine aufmontierte Spannvorrichtung 41, die hinsichtlich Funktion und Wirkung der Spannvorrichtung 21 der Fig. 1 und 2 entspricht.

## Patentansprüche

1. Fräs- und Bohrmaschine zur Fräs- und Drehbearbeitung von Stangenmaterial zu einzelnen Werkstücken, mit
- einem an einem Ständer (2) in einer ersten Koordinatenachse motorisch verfahrbaren vertikalen Spindelkopf (10), dessen Arbeitsspindel (12) zur wahlweisen Aufnahme von Fräswerkzeugen und von Drehwerkzeugen ausgebildet ist,
- einer Trennvorrichtung zum Querteilen des Stangenmaterials und
- einer seitlich neben dem Arbeitsbereich angeordneten Spannvorrichtung (21), die einen Werkstückspanner (22) mit in einer horizontalen Koordinatenachse verlaufender Spannachse und einen Drehantrieb für den Werkstückspanner (22) aufweist,
**dadurch gekennzeichnet, daß**
- der Spindelkopf (10) an der Vorderseite eines in Richtung der Y-Koordinatenachse verfahrbaren Spindelstocks (9) um eine in Y-Richtung verlaufende Achse verschwenkbar ist,
- der Spindelstock (9) auf einem in einer zur Werkstückspannachse parallelen X-Koordinatenachse auf dem ortsfesten Ständer motorisch verfahrbaren Schlitten (6) angeordnet ist, und
- die Spannvorrichtung (21) auf einer an der Stirnseite des Ständers (2) angeordneten und in der Z-Koordinatenachse in Führungen (16, 17) motorisch verfahrbaren Schrägkonsole (18) angeordnet ist.

2. Fräs- und Bohrmaschine nach Anspruch 1,
**dadurch gekennzeichnet, daß**
an der der Spannvorrichtung (21) gegenüberliegenden Seite des Arbeitsraums ein Werkzeugmagazin vorgesehen ist.

3. Fräs- und Bohrmaschine nach Anspruch 1 oder 2,
**dadurch gekennzeichnet, daß**
die Schrägkonsole (18) mit ihrem formsteifen rückwärtigen Teil in Vertikalschienen (16, 17) geführt ist, die zu beiden Seiten einer zentralen Ausnehmung (15) im Ständer (2) angeordnet sind.

4. Fräs- und Bohrmaschine nach einem der Ansprüche 1 bis 3,
**dadurch gekennzeichnet, daß**
die Schrägkonsole (18) von ihrer Rückseite schräg nach oben vorne verlaufende Versteifungsstreben (20) enthält.

5. Fräs- und Bohrmaschine nach einem der vorstehenden Ansprüche,
**dadurch gekennzeichnet, daß**
die Schrägkonsole (20) mit dem Gehäuse der Spannvorrichtung (21) einteilig ausgebildet ist.

6. Fräs- und Bohrmaschine nach einem der Ansprüche 1 bis 4,
**dadurch gekennzeichnet, daß**
die Spannvorrichtung (40) als gesonderte Baueinheit an der Schrägkonsole (39) montiert ist.

7. Fräs- und Bohrmaschine nach einem der vorstehenden Ansprüche,
**dadurch gekennzeichnet, daß**
die seitlich versetzte Schrägkonsole (39) und ein frontseitiger Konsolenteil (38) Bauteile einer Tischkonstruktion (30) sind, die mindestens eine weitere Spannplatte (31, 36) zur lösbaren Befestigung eines Zusatzaggregats (42) aufweist.

8. Fräs- und Bohrmaschine nach Anspruch 7,
**dadurch gekennzeichnet, daß**
der frontseitige Konsolenteil (38) und die Schrägkonsole (39) einen integralen durch Streben versteiften Bauteil bilden.

9. Fräs- und Bohrmaschine nach Anspruch 7 oder 8,
**dadurch gekennzeichnet, daß**
die Tischkonstruktion (30) eine frontseitige vertikale Spannplatte (31) und eine horizontale Spannplatte (36) aufweist.

## Claims

1. Milling and drilling machine for milling and drilling a rod-shaped material into individual workpieces, comprising:
- a motor-driven spindle head (10) movable on a column (2) along a first coordinate axis and including a work spindle (12) capable of selectively accommodating milling tools and turning tools,
- separating means for transversely dividing the rod-shaped material, and
- a clamping device (21) disposed laterally adjacent to the work space and comprising a workpiece holder (22) having a clamping axis extending along a horizontal coordinate axis as well as a rotary drive for the workpiece holder (22),
**characterised in that**
- the spindle head (10) can be pivoted about an axis extending in the Y direction at the front side of a headstock (9) movable in the direction of the Y coordinate axis,
- the headstock (9) is disposed on a motor-driven slide (6) movable on the stationary column along an X coordinate axis parallel to the workpiece clamping axis, and
- the clamping device (21) is disposed on an inclined console (18) located on the face of the column (2) and movable along the Z coordinate axis in guides (16, 17).

2. Milling and drilling machine according to claim 1,
**characterised in that**
a tool magazine is provided on the side of the work space which is opposed to the clamping means (21).

3. Milling and drilling machine according to claim 1 or 2,
**characterised in that**
the dimensionally stable rear portion of the inclined console (18) is guided in vertical rails (16, 17) disposed at both sides of a central recess (15) formed in the column (2).

4. Milling and drilling machine according to one of the claims 1 to 3,
**characterised in that**
the inclined console (18) includes reinforcement struts (20) extending transversely upwards and forwards from its rear side.

5. Milling and drilling machine according to one of the preceding claims,
**characterised in that**
the inclined console (18) is integrally formed with the housing of the clamping device (21).

6. Milling and drilling machine according to one of the claims 1 to 4,
**characterised in that**
the clamping device (40) is mounted on the inclined console (39) as a separate assembly.

7. Milling and drilling machine according to one of the preceding claims,
**characterized in that**
the laterally displaced inclined console (39) and a front portion (38) of the console are components of a table construction (30) which comprises at least one additional bolster plate (31, 36) for detachably mounting an additional element (42).

8. Milling and drilling machine according to claim 7,
**characterised in that**
the front portion (38) of the console and the inclined console (39) form an integral component reinforced by struts.

9. Milling and drilling machine according to claim 7 or 8,
**characterised in that**
the table construction (30) comprises a vertical front bolster plate (31) and a horizontal bolster plate (36).

## Revendications

1. Machine de fraisage et d'alésage pour le façonnage, par fraisage et par tournage, de pièces à usiner unitaires à partir de barres, comportant
- une tête porte-broche à disposition verticale (10) susceptible d'être déplacée par l'intermédiaire d'un moteur suivant un premier axe de coordonnées, dont la broche de travail (12) est conçue pour être équipée au choix d'outils de fraisage et d'outils de tournage,
- un dispositif de tronçonnage à longueur pour tronçonner transversalement les barres et
- un dispositif de bridage (21) disposé dans le plan latéral à côté de l'espace de travail, qui est muni d'un montage de bridage de pièce (22), dont l'axe de bridage s'étend suivant un axe de coordonnées horizontal et d'une unité d'entraînement en rotation du dispositif de bridage de pièces (22), **caractérisé en ce que**
- la tête porte-broche (10) est susceptible de pivoter autour d'un axe s'étendant suivant l'axe des Y, sur la face antérieure d'une poupée porte-broche (9) capable de se déplacer suivant l'axe des Y,
- la poupée porte-broche (9) est disposée sur un chariot (6), capable de se déplacer sous l'action d'un moteur sur la colonne fixe, selon un axe de coordonnées X parallèle à l'axe de bridage de la pièce en oeuvre et
- le dispositif de bridage (21) est disposé sur une console inclinée (18) montée sur la face antérieure de la colonne (2) et capable de se déplacer sous l'action d'un moteur le long de glissières (16, 17) suivant l'axe des Z.

2. Machine de fraisage et d'alésage selon la revendication 1
**caractérisée en ce**
**qu'**un magasin à outils est prévu sur le côté de l'espace de travail opposé au dispositif de bridage (21).

3. Machine de fraisage et d'alésage selon la revendication 1 ou 2
**caractérisée en ce que**
la console inclinée (18) est montée, au niveau de sa partie arrière, dont la rigidité est assurée par sa forme même, sur des glissières verticales (16, 17), qui sont ménagées dans la colonne (2) de part et d'autre d'une ouverture centrale (15).

4. Machine de fraisage et d'alésage selon l'une des revendications 1 à 3
**caractérisée** ne ce que
la console inclinée (18) est munie d'armatures de renforcement (20) qui s'étendent sur l'avant vers le haut, depuis sa partie arrière, suivant une disposition oblique.

5. Machine de fraisage et d'alésage selon l'une des revendications précèdentes,
**caractérisée en ce que**
la console inclinée (20) est réalisée solidaire du carter du dispositif de bridage (21), selon un configuration monobloc.

6. Machine de fraisage et d'alésage selon l'une des revendications 1 à 4
**caractérisée en ce que**
le dispositif de bridage (40) est monté sous la forme d'un ensemble séparé sur la console inclinée (39).

7. Machine de fraisage et d'alésage selon l'une des revendications qui précèdent
**caractérisée en ce que**
la console inclinée déportée latéralement (39) et une portion antérieure de la console (38) entrent dans la constitution d'une structure formant la table (30), qui comporte au moins un autre plateau de bridage (36) pour la fixation, avec une possibilité de démontage ultérieur, d'un équipement auxiliaire additionnel (42).

8. Machine de fraisage et d'alésage selon la revendication 7
**caractérisée en ce que**
la portion antérieure de la console (38) et la console inclinée (39) constituent un élément monobloc, dont la rigidité est accrue par des armatures de renforcement.

9. Machine de fraisage et d'alésage selon la revendication 7 ou 8
**caractérisée en ce que**
la structure formant la table comporte en face avant un plateau de bridage à disposition verticale (31) et un plateau de bridage à disposition horizontale (36).
